# EUROPEAN PATENT SPECIFICATION

(11) **EP 3 501 249 B1**
(45) Date of publication and mention of the grant of the patent: **27.10.2021**
(21) Application number: 17209874.1
(22) Date of filing: 21.12.2017
(51) Int. Cl.: A01B 71/02, A01B 79/02

(54) **A METHOD FOR OPERATING AN AGRICULTURAL MACHINE AND AGRICULTURAL MACHINE**
VERFAHREN ZUM BETRIEB EINER LANDWIRTSCHAFTLICHEN MASCHINE UND LANDWIRTSCHAFTLICHE MASCHINE
PROCÉDÉ DE FONCTIONNEMENT D'UNE MACHINE AGRICOLE ET MACHINE AGRICOLE

(43) Date of publication of application: 26.06.2019
(73) Proprietor: Kverneland Group Mechatronics BV, 2153 LR Nieuw-Vennep (NL)
(72) Inventor: BIESENBEEK, Sander, 2152 HA Nieuw-Vennep (NL)
(74) Representative: Bittner, Thomas L.

(56) References cited:
- EP-A1- 3 042 555
- EP-A2- 0 861 020
- CN-A- 107 390 620
- US-A- 3 906 710
- US-A1- 2006 123 764

## Description

The present invention refers to a method for operating an agricultural machine and an agricultural machine.

### Background

Different types of agricultural machines are known. For example, so-called agricultural application machines are provided for applying or dispensing a granular material, a liquid material or a powder-form material. For dispensing a granular material or a powder-form material, for example, a spreader may be used. A liquid material may be applied by a sprayer. Also, a seeder is an agricultural machine for applying a granular material, namely seeds.

Another type of an agricultural machine, for example, is a mower configured to cut grass or other plants that grow on soil.

Document US 2006/0123764 A1 refers to windrow shields that pivot adjacent the forward ends thereof into and out of the path of crop material to control the width of the windrow. An electric motor and linkage to the shields allows the relationship between the shields to be adjusted on-the-go from the operator's location.

Document US 3,906,710 discloses an automatic height-of-cut control for a crop harvesting implement such as a swather comprising a sensor disposed behind the cutting bar for indicating the cut crop material length. In one embodiment the sensor is positioned by a cable and pulley mechanism in relation to the cutting bar height such that for positions of the cutting bar there is a corresponding sensor position providing a preselected stubble to crop height ratio. A controller filters the sensor output which positions an electrohydraulic valve to either raise, lower or maintain the swather table by means of a hydraulic actuator.

Document EP 3 042 555 A1 refers to the field of seeders. In a seeder unit a movable member can be relocated with respect to a seeder disc, thereby, providing different lines of movement for seeds ejected by the seeder disc through the movable member.

Document CN 10 7390620 refers to an agricultural work machine, comprising an automatic work control unit. The automatic work control unit has a system management module, a memory module, a human-machine interaction module, an interpolation module, a PLC function module, a position control module, a system bus, a work work program automatic generation module, a work tool device control module, and a communication module. An electrical logic control unit has a CPU, a RAM, a ROM, and an input and output interface circuit. The electrical logic control unit internally adopts a bus structure. The bus is used for transmitting data information, address information, and control information. A driving unit includes: a position control unit, a speed control unit, a detection and feedback unit, and a driving unit. An agricultural work machine mechanical structure main body has front and rear (Y-axis) motion driving devices, upper and lower (Z-axis) lifting driving devices, left and right (X-axis) motion driving devices, rotary driving devices, and working tool device clamping and placing devices. The working tool device has a grip handle, a workman equipment racks and work tool.

Document WO 98 / 04112 A2 discloses a mowing machine, comprising a cutter bar, a crushing device including a rotor provided with crushing elements, and adjusting means by means of which the distance between the crushing elements and the cutter bar can be adjusted. The mowing machine further comprises measuring means with the aid of which it is possible to determine the number of revolutions and / or the force by which the crushing device is driven. The mowing machine further comprises a control mechanism for activating the adjusting means on the basis of the signals supplied by the measuring means.

### Summary

It is an object to provide a method for operating an agricultural machine and an agricultural machine for which improved operating conditions are provided.

For solving the problem a method for operating an agricultural machine according to claim 1 and an agricultural machine according to claim 12 are provided. Embodiments are provided in dependent claims.

The working space may be referred to as an area of activity of a working tool of the working device. For example, with regard to a spreader or sprayer, the working space may be the space to which the material to be applied is dispensed. The working tool can be operated by driving the working device.

The determining may refers to measuring or detecting, by the control unit, the first and second electric load supplied to the electric drive. Electric energy may be provided to the electric drive by a power supply provided on a tractor or an implement trailed or carried by the tractor. The agricultural machine, alternatively, may be provided as a self-propelling machine.

The information gathered by determining the first and second electric load may be used in a process of observing operation of the agricultural machine. Alternatively, the information about the first and second electric load may be used for controlling any function of the agricultural machine in response to determining at least one of the first and second electric loads. For example, a mode of operation for the tractor and / or the implement trailed or carried by the tractor may be controlled in response to determining at least one of the first and second electric load supplied to the electric drive.

The electric power provided to the electric drive may comprise at least one of AC voltage and DC voltage.

The forming of the second working space may comprise reducing the first working space to the second working space reduced compared to the first working space. Alternatively, the forming of the second working space may comprise expanding the first working space to the second working space expanded or being wider compared to the first working space. The second working space may cover a spatial room bigger than the first working space. Alternatively, the second working space may cover an area in a working plane different from the first working space.

The method further comprises: determining a first working space condition from the first electric load indicative of the first working space condition; and determining a second working space condition from the second electric load indicative of the second working space condition. For example, the first work space condition may be an overload condition. If, by the working device, a granular or a liquid material is dispensed, the overload condition may indicate too much material dispensed into the working space at a given point of time. For example, there may be too much of the liquid or granular material in the working space causing a higher electric load to the working device. The second working space condition may indicate a non-overload condition. In such case the second electric load may be below a threshold electric load, thereby, indicating that there is not too much material dispensed to the working space.

The method may further comprise positioning the shaping member in a third position relative to the working device in response to determining the first working space condition or the second working space condition, the third positon being different from the first and second positions. If it is determined that the first or the second working space condition is present, the shaping member is moved to a different position, for example, for reducing or eliminating an overload condition with regard to the working space. In case the agricultural machine is provided with a mower, the first or the second electric load supplied to the electric drive may indicate a condition of congestion in the working space. Moving the shaping member to the third position may provide for reducing or eliminating the congestion. Such mode of congestion may be indicated by the electric load supplied to the electric drive being above a threshold value.

The method may further comprise operating the electric device with a third electric load different from the first and second electric load. In addition to moving the shaping device to the third position the electric load provided to the electric drive may be increased or decreased, thereby, providing the third electric load.

The method may further comprise determining at least one of determining a first position value for the first position of the shaping device from the first electric load indicative of the first position; and determining a second position value for the second position of the shaping device from the second electric load indicative of the second position. The first or second position values may indicate a distance between the shaping member and some reference point, for example, a reference point on the working device. Alternatively or in addition, the first and second position values may be indicative of a positional height of the shaping member. Also, a spatial position of the shaping member may be indicated by the first and second position values. It may be further provided to position the shaping member in a third position relative to the working position in response to determining the first position value or the second position value.

The method may further comprise comparing at least one of the first electric load and the second electric load to reference electric load data, the reference electric load data being assigned to least one of the following: the first work space condition, the second work space condition, the first position value, and the second position value. The electric load measured or detected while the working device is driven by the electric drive is compared to reference electric load data which in turn are assigned to different conditions or values. Thereby, a present electric load detected or measured can be assigned to some condition and / or position value. For example, a present position of the shaping member is determined from the information about the first and / or the second electric load supplied to the electric drive.

The method may further comprise providing the working device with a spreader device configured to dispense a granular material; and driving the spreader device by the electric drive. The spreader may be a disc spreader. In such and other embodiments the shaping member may be provided with a plate member, for example a border plate. The plate member, for example, is movable relative to the spreader device for shaping or conditioning the area or the space provided for the working space. For example, the plate member may be used to limit the working space if the spreader or sprayer comprising the spreader device and the sprayer device, respectively, is moving along a border of a field to which the granular / liquid material is dispensed. By moving the plate member in different positions relative to the spreader or sprayer device, the area or the space (working space) to which the granular or liquid material is dispensed is shaped or conditioned. Depending on the position of the plate member relative to the spreader or sprayer device the electric load of the electric drive will vary because of providing different conditions for the dispensing process. In conclusion, the electric load measured for the electric drive may be indicative of the positioning of the plate member relative to the spreader device or the sprayer device.

The method may further comprise providing the working device with a sprayer device configured to dispense a liquid material; and driving the sprayer device by the electric drive. The sprayer device may be provided with a nozzle for dispensing the liquid material. The observations or embodiments disclosed above with regard to the spreader device may apply to the sprayer device mutatis mutandis.

The method may further comprise: providing the working device with a cutting device configured to cut grass or other plant; and driving the cutting device by the electric drive. The cutting device may be provided on a mower. A shaping device may be provided with a plate such a movable cover plate positioned for shaping the working space, such working space allowing free movement of a cutting tool of a cutting device, for example free rotation in the process of cutting grass or other plants. The embodiments outlined above with regard to at least one of the spreader device and the sprayer device may apply to the cutting device mutatis mutandis.

The method may further comprise positioning a swath forming member in an operation position in response to determining at least one of the first working space condition, the second working space condition, the first position value, and the second position value. The swath forming member may be pivotably or movably mounted on a mower, the swath forming member being configured to form a swath from crop cut by the cutting device. Depending on the load received by the electric drive the swath forming process may be controlled by controlling positioning of the swath forming member, the swath forming member being moved to different operation positions.

The method may further comprise providing the working device with a seeder device configured to dispense seeds; and driving the seeder device by the electric drive. The shaping member may be provided with a plate configured to additional guide seeds dispensed from an opening of the seeder device.

With regard to the agricultural machine, the embodiments disclosed with regard to the method of operating the agricultural machine above may apply *mutatis mutandis.* The agricultural machine may be an agricultural application machine such as spreader, sprayer, mower or seeder.

### Description of embodiments

Following, further embodiments, by way of example, are described with reference to figures. In the figures show:
- Fig. 1: a schematic representation of an arrangement comprising a spreader device;
- Fig. 2: a schematic representation of the arrangement in Fig. 1, wherein a shaping device is moved to a different position;
- Fig. 3: a schematic representation of an arrangement comprising a sprayer device;
- Fig. 4: a schematic representation of an arrangement comprising a cutting device; and
- Fig. 5: a schematic representation of another arrangement comprising a cutting device for a mower.

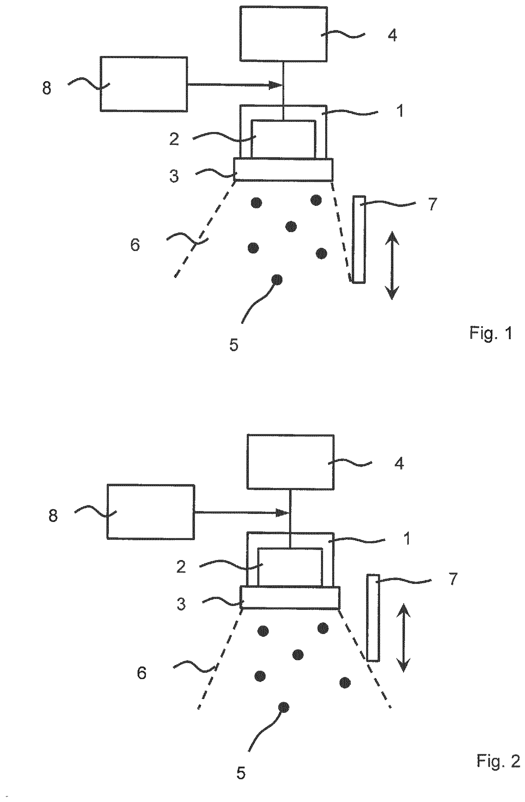

Fig. 1 shows a schematic representation of an arrangement for an agricultural machine provided with a working device 1 which is a spreader device in the embodiment shown. The working device 1 is assigned an electric drive 2 such as an electric motor configured to drive the working device 1. Specifically, a working tool 3 of the working device 1 is driven by the electric drive 2. In the embodiment shown, the working device 3 may be provided with a disc spreader driven by the electric drive 2 for applying or dispensing some material.

Electric energy is supplied to the electric drive 2 by a power supply 4 provided, for example, on a tractor or an implement trailed or carried by the tractor, the implement comprising the working device 1. AC or DC voltage may be provided to the working device 1.

Referring to Fig. 1, the working device 1 is dispensing a granular material 5 into a working space 6 assigned to the working device 1. A shaping member 7 is provided, for example a plate member, for conditioning or shaping the working space 6 on at least one side. Depending on the position of the shaping member 7 relative to the working device 1 there are differently shaped or conditioned forms of the working space 6 (see Figs. 1 and 2). In an alternative embodiment more than one shaping member may be provided.

In case the working device 1 is driven for operation (applying material), depending on the actual shape or form of the working space 6, the electric load supplied to or needed by the electric drive 2 will be different. Such different electric loads are detected by a control unit 8. The electric loads measured by the control unit 8 are compared to reference electric load data provided, for example, in a memory of the control unit 8, for assigning a measured electric load to a reference electric load. The reference electric load is assigned to a working space condition. In addition, the reference electric load may be assigned to a position value indicative of the position of the shaping member 7. Such analysis of the operation conditions present can be done without additional sensor devices for measuring the relative position between the working device 1 and the shaping member 7, exclusively based on the information about the electric load.

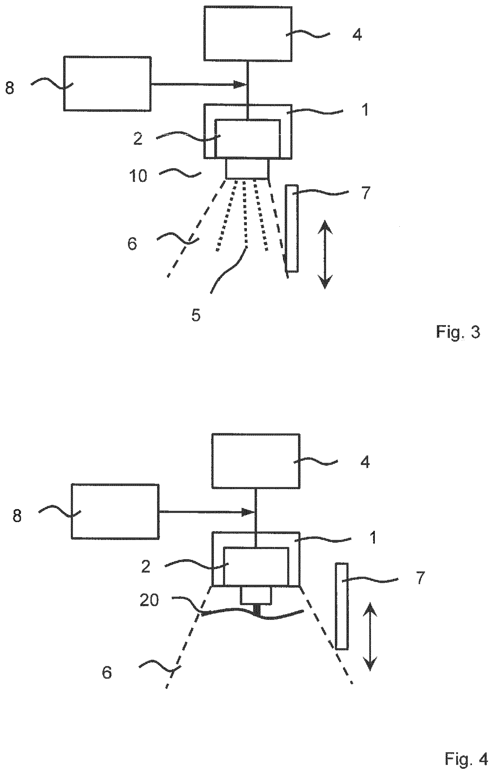

Fig. 3 shows a schematic representation of an arrangement for an agricultural machine in which the working device 1 is provided with a sprayer device 10 configured to dispense some liquid material. The arrangement from Fig. 3 may be provided in an agricultural sprayer. The embodiments described above with regard to the arrangement in Fig. 1 and 2 apply to the arrangement in Fig. 3 *mutatis mutandis.*

Fig. 4 shows a schematic representation of an arrangement in which the working device 1 is provided with a cutting device 20 configured to cut grass or other grown plants. The arrangement may be provided in a mower. Again, the shaping member 7 is positioned in the vicinity of the cutting device 20, thereby, shaping the working space 6. The electric load to the cutting device 20 may depend, for example, on some congestion condition or non-congestion condition with regard to the working space 6 indicating the working space 6 covered or congested by crop more or less. For example, in case of congestion condition the electric load will increase indicating a position of the shaping member 7 limiting the working space 6 too much. In response to such detection of electric load, the shaping member 7 may be moved in a position (e.g. moving up) providing a wider working space 6 for the cutting device 20.

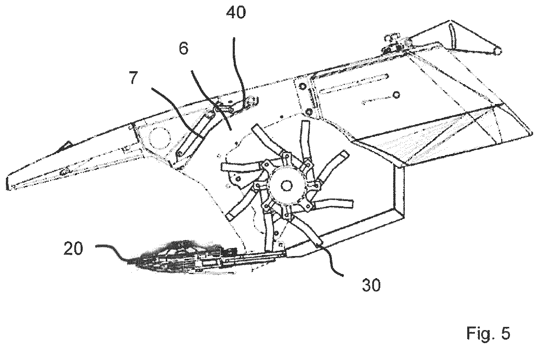

Fig. 5 shows a schematic representation of another arrangement comprising a cutting device 20 for a mower. Crop cut will be conditioned by a conditioner 30. The working space 6 assigned to the conditioner 30 can be adjusted by the shaping member 7 provided with a conditioner plate 40 pivotable.

## Claims

1. A method for operating an agricultural machine having
- a working device (1);
- an electric drive (2) configured to drive the working device (1);
- a control unit (8); and
- a shaping member (7) configured to shape a working space (6) assigned to the working device (1) by relative movement between the working device (1) and the shaping member (7);
the method comprising
- driving the working device (1) by the electric drive (2);
- forming a first working space, comprising positioning the shaping member (7) in a first position relative to the working device (1); and
- forming a second working space, comprising positioning the shaping member (7) in a second position relative to the working device (1);
**characterized in that** the method further comprises determining, by the control unit (8),
- a first electric load supplied to the electric drive (2) when the first working space is formed;
- a first working space condition from the first electric load indicative of the condition in the J Z first working space;
- a second electric load supplied to the electric drive (2) when the second working space is formed, the second electric load being different from the first electric load; and
- a second working space condition from the second electric load indicative of the condition in the second working space.

2. The method according to claim 1, wherein the forming of the second working space comprises reducing the first working space (6) to the second working space reduced compared to the first working space.

3. The method according to claim 1 or 2, further comprising positioning the shaping member (7) in a third position relative to the working device (1) in response to determining the first working space condition or the second working space condition, the third positon being different from the first and second positions.

4. The method according to at least one of the preceding claims, further comprising operating the electric device (2) with a third electric load different from the first and second electric load.

5. The method according to at least one of the preceding claims, further comprising determining at least one of
- determining a first position value for the first position of the shaping member (7) from the first electric load indicative of the first position; and
- determining a second position value for the second position of the shaping member (7) from the second electric load indicative of the second position.

6. The method according to at least one of the preceding claims, further comprising comparing at least one of the first electric load and the second electric load to reference electric load data, the reference electric load data being assigned to least one of the following: the first work space condition, the second work space condition, the first position value, and the second position value.

7. The method according to at least one of the preceding claims, further comprising
- providing the working device (1) with a spreader device configured to dispense a granular material; and
- driving the spreader device by the electric drive (2).

8. The method according to at least one of the preceding claims, further comprising
- providing the working device (1) with a sprayer device configured to dispense a liquid material; and
- driving the sprayer device by the electric drive (2).

9. The method according to at least one of the preceding claims, further comprising
- providing the working device (1) with a cutting device configured to cut grass or other plant; and
- driving the cutting device by the electric drive (2).

10. The method according to claim 10, further comprising positioning a swath forming member in an operation position in response to determining at least one of the first working space condition, the second working space condition, the first position value, and the second position value.

11. The method according to at least one of the preceding claims, further comprising
- providing the working device (1) with a seeder device configured to dispense seeds; and
- driving the seeder device by the electric drive (2).

12. An agricultural machine having
- a working device (1);
- an electric drive (2) configured to drive the working device (1);
- a control unit (8); and
- a shaping member (7) configured to shape a working space (6) assigned to the working device (1) by relative movement between the working device (1) and the shaping member (7);
**characterized in that** the control unit (8) is configured to determine
- a first electric load supplied to the electric drive (2) when a first working space is formed, the forming comprising positioning the shaping member (7) in a first position relative to the working device (1);
-- a first working space condition from the first electric load indicative of the condition in the first working space;
- a second electric load supplied to the electric drive (2) when a second working space is formed, the forming comprising positioning the shaping member (7) in a second position relative to the working device (1); and
- a second working space condition from the second electric load indicative of the condition in the second working space.

13. Agricultural machine according to claim 12, selected from the following group: agricultural application machine such as spreader or sprayer, mower, and seeder.

## Patentansprüche

1. Verfahren zum Betreiben einer landwirtschaftlichen Maschine, aufweisend
- eine Arbeitsvorrichtung (1);
- einen elektrischen Antrieb (2), welcher dafür eingerichtet ist, die Arbeitsvorrichtung anzutreiben (1);
- eine Steuereinheit (8); und
- ein Formgebungselement (7), welches dafür eingerichtet ist, einen Arbeitsbereich (6), welcher der Arbeitsvorrichtung (1) zugewiesen ist, durch eine Relativbewegung zwischen der Arbeitsvorrichtung (1) und dem Formgebungselement (7) zu bilden;
wobei das Verfahren umfasst:
- Antreiben der Arbeitsvorrichtung (1) durch den elektrischen Antrieb (2);
- Bilden eines ersten Arbeitsbereichs, umfassend Positionieren des Formgebungselements (7) in einer ersten Position relativ zur Arbeitsvorrichtung (1); und
- Bilden eines zweiten Arbeitsbereichs, umfassend Positionieren des Formgebungselements (7) in einer zweiten Position relativ zur Arbeitsvorrichtung (1);
**dadurch gekennzeichnet, dass** das Verfahren das Bestimmen der folgenden Werte durch die Steuereinheit (8) umfasst,
- einer ersten elektrischen Last, welche dem elektrischen Antrieb (2) zugeführt wird, wenn der erste Arbeitsbereich gebildet wird;
- eines ersten Arbeitsbereichszustands aus der ersten elektrischen Last, welcher den Zustand im ersten Arbeitsbereich anzeigt;
- einer zweiten elektrischen Last, welche dem elektrischen Antrieb (2) zugeführt wird, wenn der zweite Arbeitsbereich gebildet wird, wobei sich die zweite elektrische Last von der ersten elektrischen Last unterscheidet; und
- eines zweiten Arbeitsbereichszustands aus der zweiten elektrischen Last, welcher den Zustand im zweiten Arbeitsbereich anzeigt.

2. Verfahren nach Anspruch 1, wobei das Bilden des zweiten Arbeitsbereichs das Verringern des ersten Arbeitsbereichs (6) auf den zweiten Arbeitsbereich, welcher im Vergleich zum ersten Arbeitsbereich verringert ist, umfasst.

3. Verfahren nach Anspruch 1 oder 2, ferner umfassend das Positionieren des Formgebungselements (7) in einer dritten Position relativ zur Arbeitsvorrichtung (1) als Reaktion auf das Bestimmen des ersten Arbeitsbereichszustands oder des zweiten Arbeitsbereichszustands, wobei sich die dritte Position von der ersten Position und der zweiten Position unterscheidet.

4. Verfahren nach mindestens einem der vorstehenden Ansprüche, ferner umfassend das Betreiben des elektrischen Antriebs (2) mit einer dritten elektrischen Last, welche sich von der ersten Last und der zweiten Last unterscheidet.

5. Verfahren nach mindestens einem der vorstehenden Ansprüche, ferner umfassend das Bestimmen mindestens eines der Werte aus der Gruppe umfassend
- einen ersten Positionswert für die erste Position des Formgebungselements (7), welcher die erste Position anzeigt, aus der ersten elektrischen Last; und
- einen zweiten Positionswert für die zweite Position des Formgebungselements (7), welcher die zweite Position anzeigt, aus der zweiten elektrischen Last.

6. Verfahren nach mindestens einem der vorstehenden Ansprüche, ferner umfassend das Vergleichen mindestens eines der Werte aus der Gruppe umfassend die erste elektrische Last und die zweite elektrische Last mit elektrischen Referenzlastdaten, wobei die elektrischen Referenzlastdaten mindestens einem der Werte aus der folgenden Gruppe zugeordnet sind: dem ersten Arbeitsbereichszustand, dem zweiten Arbeitsbereichszustand, dem ersten Positionswert und/oder dem zweiten Positionswert.

7. Verfahren nach mindestens einem der vorstehenden Ansprüche, ferner umfassend
- Ausrüsten der Arbeitsvorrichtung (1) mit einer Streuvorrichtung, welche dafür eingerichtet ist, ein körniges Material auszugeben; und
- Antreiben der Streuvorrichtung durch den elektrischen Antrieb (2).

8. Verfahren nach mindestens einem der vorstehenden Ansprüche, ferner umfassend
- Ausrüsten der Arbeitsvorrichtung (1) mit einer Sprühvorrichtung, welche dafür eingerichtet ist, ein flüssiges Material auszugeben; und
- Antreiben der Sprühvorrichtung durch den elektrischen Antrieb (2).

9. Verfahren nach mindestens einem der vorstehenden Ansprüche, ferner umfassend
- Ausrüsten der Arbeitsvorrichtung (1) mit einer Mähvorrichtung, welche dafür eingerichtet ist, Gras oder andere Pflanzen zu mähen; und
- Antreiben der Mähvorrichtung durch den elektrischen Antrieb (2).

10. Verfahren nach Anspruch 10, ferner umfassend das Positionieren eines Schwadenformungselements in einer Betriebsposition als Reaktion auf das Bestimmen mindestens eines der Werte aus der Gruppe umfassend den ersten Arbeitsbereichszustand, den zweiten Arbeitsbereichszustand, den ersten Positionswert und den zweiten Positionswert.

11. Verfahren nach mindestens einem der vorstehenden Ansprüche, ferner umfassend
- Ausrüsten der Arbeitsvorrichtung (1) mit einer Sävorrichtung, welche dafür eingerichtet ist, Saatgut auszugeben; und
- Antreiben der Sävorrichtung durch den elektrischen Antrieb (2).

12. Landwirtschaftliche Maschine aufweisend
- eine Arbeitsvorrichtung (1);
- einen elektrischen Antrieb (2), welcher dafür eingerichtet ist, die Arbeitsvorrichtung anzutreiben (1);
- eine Steuereinheit (8); und
- ein Formgebungselement (7), welches dafür eingerichtet ist, einen Arbeitsbereich (6), welcher der Arbeitsvorrichtung (1) zugewiesen ist durch eine Relativbewegung zwischen der Arbeitsvorrichtung (1) und dem Formgebungselement (7) zu bilden;
**dadurch gekennzeichnet, dass** die Steuereinheit (8) dafür eingerichtet ist,
- eine erste elektrische Last, welche dem elektrischen Antrieb (2) zugeführt wird, wenn ein erster Arbeitsbereich gebildet wird, wobei das Bilden das Positionieren des Formgebungselements (7) in einer ersten Position relativ zur Arbeitsvorrichtung (1) umfasst;
- einen ersten Arbeitsbereichszustand aus der ersten elektrischen Last, welcher den Zustand im ersten Arbeitsbereich anzeigt;
- eine zweite elektrische Last, welche dem elektrischen Antrieb (2) zugeführt wird, wenn ein zweiter Arbeitsbereich gebildet wird, wobei das Bilden das Positionieren des Formgebungselements (7) in einer zweiten Position relativ zur Arbeitsvorrichtung (1) umfasst; und
- einen zweiten Arbeitsbereichszustand aus der zweiten elektrischen Last, welcher den Zustand im zweiten Arbeitsbereich anzeigt
zu bestimmen.

13. Landwirtschaftliche Maschine nach Anspruch 12, ausgewählt aus der folgenden Gruppe: Maschine zur landwirtschaftlichen Anwendung, wie zum Beispiel ein Streuer oder ein Sprüher, ein Mäher oder eine Sävorrichtung.

## Revendications

1. Procédé de fonctionnement d'une machine agricole ayant
- un dispositif de travail (1) ;
- un entraînement électrique (2) configuré pour entraîner le dispositif de travail (1) ;
- une unité de commande (8) ; et
- un élément de mise en forme (7) configuré pour mettre en forme un espace de travail (6) attribué au dispositif de travail (1) grâce à un mouvement relatif entre le dispositif de travail (1) et l'élément de réglage (7) ;
le procédé comprenant
- l'entraînement du dispositif de travail (1) grâce à l'entraînement électrique (2) ;
- la formation d'un premier espace de travail comprenant le positionnement de l'élément de mise en forme (7) dans une première position par rapport au dispositif de travail (1) ; et
- la formation d'un deuxième espace de travail comprenant le positionnement de l'élément de mise en forme (7) dans une deuxième position par rapport au dispositif de travail (1) ;
**caractérisé en ce que** le procédé comprend en outre la détermination, par l'unité de commande (8),
- d'une première charge électrique qui alimente l'entraînement électrique (2) lorsque le premier espace de travail est formé ;
- d'un premier état d'espace de travail d'après la première charge électrique indicative de l'état dans le premier espace de travail ;
- d'une deuxième charge électrique qui alimente l'entraînement électrique (2) lorsque le deuxième espace de travail est formé, la deuxième charge électrique étant différente de la première charge électrique ; et
- d'un deuxième état d'espace de travail d'après la deuxième charge électrique indicative de l'état dans le deuxième espace de travail.

2. Procédé selon la revendication 1, dans lequel la formation du deuxième espace de travail comprend la réduction du premier espace de travail (6) au deuxième espace de travail réduit en comparaison avec le premier espace de travail.

3. Procédé selon la revendication 1 ou 2, comprenant en outre le positionnement de l'élément de mise en forme (7) dans une troisième position par rapport au dispositif de travail (1) en réponse à la détermination du premier état d'espace de travail ou du deuxième état d'espace de travail, la troisième position étant différente des première et deuxième positions.

4. Procédé selon l'une au moins des revendications précédentes, comprenant en outre l'actionnement du dispositif électrique (2) avec une troisième charge électrique différente de la première et la deuxième charge électrique.

5. Procédé selon l'une au moins des revendications précédentes, comprenant en outre la détermination d'au moins l'une parmi
- la détermination d'une valeur de première position pour la première position de l'élément de mise en forme (7) d'après la première charge électrique indicative de la première position ; et
- la détermination d'une valeur de deuxième position pour la deuxième position de l'élément de mise en forme (7) d'après la deuxième charge électrique indicative de la deuxième position.

6. Procédé selon l'une au moins des revendications précédentes, comprenant en outre la comparaison entre au moins l'une parmi la première charge électrique et la deuxième charge électrique avec des données de charge électrique de référence, les données de charge électrique de référence étant attribuées à au moins l'un(e) parmi ce qui suit : le premier état d'espace de travail, le deuxième état d'espace de travail, la valeur de première position et la valeur de deuxième position.

7. Procédé selon l'une au moins des revendications précédentes, comprenant en outre
- la fourniture, au dispositif de travail (1), d'un dispositif d'épandage configuré pour distribuer un matériau granulaire ; et
- l'entraînement du dispositif d'épandage grâce à l'entraînement électrique (2).

8. Procédé selon l'une au moins des revendications précédentes, comprenant en outre
- la fourniture, au dispositif de travail (1), d'un dispositif de pulvérisation configuré pour distribuer un matériau liquide ; et
- l'entraînement du dispositif de pulvérisation grâce à l'entraînement électrique (2).

9. Procédé selon l'une au moins des revendications précédentes, comprenant en outre
- la fourniture, au dispositif de travail (1), d'un dispositif de coupe configuré pour couper de l'herbe ou d'autres plantes ; et
- l'entraînement du dispositif de coupe grâce à l'entraînement électrique (2).

10. Procédé selon la revendication 10, comprenant en outre le positionnement d'un élément de formation d'andain dans une position de fonctionnement en réponse à la détermination d'au moins l'un(e) parmi le premier état d'espace de travail, le deuxième état d'espace de travail, la valeur de première position, et la valeur de deuxième position.

11. Procédé selon l'une au moins des revendications précédentes, comprenant en outre
- la fourniture, au dispositif de travail (1), d'un semoir configuré pour distribuer des graines ; et
- l'entraînement du semoir grâce à l'entraînement électrique (2).

12. Machine agricole ayant
- un dispositif de travail (1) ;
- un entraînement électrique (2) configuré pour entraîner le dispositif de travail (1) ;
- une unité de commande (8) ; et
- un élément de mise en forme (7) configuré pour mettre en forme un espace de travail (6) attribué au dispositif de travail (1) grâce à un mouvement relatif entre le dispositif de travail (1) et l'élément de mise en forme (7) ;
**caractérisé en ce que** l'unité de commande (8) est configurée pour déterminer
- une première charge électrique qui alimente l'entraînement électrique (2) lorsqu'un premier espace de travail est formé, la formation comprenant le positionnement de l'élément de mise en forme (7) dans une première position par rapport au dispositif de travail (1) ;
- un premier état d'espace de travail d'après la première charge électrique indicative de l'état dans le premier espace de travail ;
- une deuxième charge électrique qui alimente l'entraînement électrique (2) lorsqu'un deuxième espace de travail est formé, la formation comprenant le positionnement de l'élément de mise en forme (7) dans une deuxième position par rapport au dispositif de travail (1) ; et
- un deuxième état d'espace de travail d'après la deuxième charge électrique indicative de l'état dans le deuxième espace de travail.

13. Machine agricole selon la revendication 12, sélectionnée dans le groupe suivant :
machine d'application agricole telle un épandeur ou pulvérisateur, une tondeuse, et un semoir.
